# FASCICULE DE BREVET EUROPEEN

(11) **EP 2 665 909 B1**
(45) Date de publication et mention de la délivrance du brevet: **13.09.2017**
(21) Numéro de dépôt: 12702596.3
(22) Date de dépôt: 09.01.2012
(51) Int. Cl.: F02K 1/30, B64C 21/02, B64D 33/02, B64D 33/04, F02C 7/04, B64D 33/00, F02C 7/00, F02K 3/06

(54) **NACELLE POUR UN TURBORÉACTEUR D'AÉRONEF DOUBLE FLUX**
TRIEBWERKSGONDEL FÜR NEBENSTROM-TRIEBWERK
ENGINE NACELLE FOR TURBOFAN ENGINE

(30) Priorité: 19.01.2011 FR 1150412
(43) Date de publication de la demande: 27.11.2013
(73) Titulaire: Safran Nacelles, 76700 Gonfreville-l'Orcher (FR)
(72) Inventeur: GONIDEC, Patrick, F-31530 Bretx (FR); BLIN, Laurent Albert, F-76310 Sainte Adresse (FR)
(74) Mandataire: Gaillarde, Frédéric F. Ch.
(86) Numéro de dépôt international: PCT/FR2012/050052
(87) Numéro de publication internationale: WO 2012/098322

(56) Documents cités:
- EP-A2- 1 921 291
- FR-A- 1 505 592
- GB-A- 1 298 069
- US-B1- 6 655 632

## Description

La présente invention se rapporte à une nacelle pour un turboréacteur d'aéronef double flux ainsi qu'à un aéronef comportant une telle nacelle.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire suivant un axe longitudinal comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine annulaire».

On entend ici par le terme « aval » la direction correspondant au sens du flux d'air froid pénétrant dans le turboréacteur. Le terme « amont » désigne la direction opposée.

Ladite veine annulaire est formée par une structure externe, dite Outer Fixed Structure (OFS) et une structure interne concentrique, dite Inner Fixed Structure (IFS), entourant la structure du moteur proprement dite à l'aval de la soufflante. Les structures interne et externe appartiennent à la section aval. La structure externe peut comporter un ou plusieurs capots coulissants suivant l'axe longitudinal de la nacelle entre une position permettant l'échappement du flux d'air inversé et une position empêchant un tel échappement.

Par ailleurs, outre sa fonction d'inversion de poussée, le capot coulissant appartient à la section arrière et présente un côté aval formant la tuyère d'éjection visant à canaliser l'éjection du flux d'air froid, désigné ci-après par « flux d'air principal ». Cette tuyère fournit la puissance nécessaire pour la propulsion en imprimant une vitesse aux flux d'éjection. Cette tuyère est associée à un système d'actionnement indépendant ou non de celui du capot permettant de faire varier et d'optimiser sa section en fonction de la phase de vol dans laquelle se trouve l'aéronef.

Il peut s'avérer avantageux de diminuer la section d'entrée ou d'éjection du flux d'air principal dans l'espace formé par l'entrée d'air et la veine annulaire.

Il est actuellement connu de diminuer la section d'éjection du flux d'air principal au niveau de la sortie de la veine annulaire par l'intermédiaire d'une tuyère variable formée par les capots coulissants de l'OFS. Une telle tuyère variable permet de moduler la poussée en faisant varier sa section de sortie en réponse à des variations du réglage de la puissance du turboréacteur et des conditions de vol.

Cependant, la variation de la section d'éjection du flux d'air principal n'est pas toujours suffisamment rapide du fait de l'inertie des pièces mécaniques formant la tuyère variable, en cas de modification très rapide des conditions de vol.

Il est connu des dispositifs permettant de moduler très rapidement la section d'éjection du flux d'air principal. Néanmoins, ce type de dispositifs augmente le poids de la nacelle et comprend des mécanismes complexes qui pénalisent souvent la fiabilité globale et les performances propulsives par des pertes aérodynamiques importantes. On vise à éviter ce type de défaut dans les avions civils où le gain de masse, l'augmentation de la fiabilité et des performances propulsives, ainsi que la diminution des pertes aérodynamiques sont favorisés. On connaît par ailleurs, du document GB 1 298 069, un dispositif de recirculation d'air situé dans l'entrée d'air d'une nacelle.

Il n'est pas connu de dispositif rapide et fiable permettant de modifier la section d'éjection du flux d'air principal dans la veine annulaire tout en conservant la masse de la nacelle et en offrant peu de perte aérodynamique.

Un but de la présente invention est donc de fournir une nacelle ne présentant pas les inconvénients précités et répondant à ce besoin.

A cet effet, selon un premier aspect, la présente invention a pour objet une nacelle pour un turboréacteur d'aéronef double flux présentant un axe longitudinal et une section arrière comportant une veine annulaire formant un espace de circulation d'un flux d'air principal délimitée par au moins une paroi d'une structure interne fixe et au moins une paroi d'une structure externe, ladite nacelle comprenant au moins un dispositif de modulation de la section transversale dudit espace disposé dans la paroi de la structure externe et/ou de la structure interne fixe et comportant :
- des moyens d'injection d'un flux annexe d'un gaz configurés pour faire varier l'orientation et/ou la vitesse dudit flux annexe;
- des moyens d'aspiration d'au moins une partie de ce flux annexe injecté ; et
- une zone de retour interne du flux annexe dans une ou plusieurs parois, ladite zone étant configurée pour permettre la circulation de la partie du flux annexe injecté et du flux annexe aspiré, et pour mettre en contact une partie du flux annexe injecté et du flux d'air principal.

Par « flux d'air principal qui circule », on entend la pénétration du flux d'air principal dans l'espace, la circulation dudit flux d'air dans cet espace et l'ejection ou la sortie de ce flux d'air hors de cet espace.

Par « section transversale », on entend une section réalisation transversalement par rapport à l'axe longitudinal de la nacelle.

Le dispositif de modulation de la nacelle de l'invention engendre de manière ponctuelle et réversible une distortion de la couche limite formée par le contact entre le gaz du flux annexe et l'air du flux principal. L'épaisseur de cette distortion de la couche limite engendre une réduction de la section d'entrée ou de sortie ressentie par le flux principal.

L'épaisseur de cette couche limite est plus ou moins grande en fonction des moyens d'injection et des moyens d'aspiration.

Par conséquent, le dispositif de modulation de la nacelle de l'invention permet de manière simple, efficace, fiable et très rapide de modifier la taille de la section du flux d'air principal. Le temps de réponse du dispositif n'est pas limité par l'inertie de pièces mécaniques de grandes dimensions devant se mouvoir entre elles. On peut citer à titre d'exemple de pièce mécanique de grandes dimensions les panneau de capot coulissant d'inverseur de poussée ou le panneau interne d'entrée d'air.

Selon d'autres caractéristiques de l'invention, la nacelle de l'invention comporte l'une ou plusieurs des caractéristiques optionnelles suivantes considérées seules ou selon toutes les combinaisons possibles :
- le gaz du flux annexe est de l'air ce qui permet d'éviter d'alourdir la nacelle par le transport d'un gaz particulier;
- les moyens d'injection comprennent une buse d'éjection ce qui permet d'éjecter simplement et en peu de place le gaz du flux annexe ;
- la buse d'éjection est orientable ce qui permet de modifier l'épaisseur de la couche limite formée par le contact entre le flux annexe et le flux principal, notamment en adaptant l'angle de confluence formé entre l'écoulement du gaz injecté et l'écoulement principal;
- les moyens d'injection comprennent un système de prélèvement de gaz comprenant au moins une vanne configurée pour faire varier le débit du flux annexe ;
- la ou les vannes sont contrôlées par des capteurs ce qui permet de modifier le flux annexe selon les modifications des conditions de vol ;
- les moyens d'aspiration sont choisis parmi une paroi perforée monolithique, une paroi à cellules alvéolaires, des grilles, notamment des grilles d'aube, des treillis, une ou plusieurs fentes longitudinales ou non ce qui permet une aspiration efficace et peu encombrante ;
- les moyens d'injection et/ou d'aspiration sont régulés par un dispositif de modification de l'energie cinétique, du débit et de l'orientation du flux annexe ce qui permet de contrôler l'épaisseur de la zone de circulation distordant sensiblement couche limite ;
- la zone de retour interne est une cavité comprenant une ouverture en aval configurée pour aspirer au moins une partie du gaz en contact avec l'air du flux principal et une sortie en amont configurée pour permettre la circulation du gaz injecté par les moyens d'injection et le gaz circulant dans la cavité, ce qui simplifie l'installation ;
- la paroi sensiblement en regard du flux annexe injecté par les moyens d'injection présente une surface arrondie ou anguleuse ce qui permet d'avoir un profil du flux annexe et la forme de la zone de circulation souhaités ;
- le dispositif de modulation est disposé dans la paroi d'une lèvre d'entrée d'air, d'une structure externe et/ou d'une structure interne ;

L'invention sera davantage comprise à la lecture de la description non limitative qui va suivre, faite en référence aux figures ci-annexées.
- la figure 1 est une coupe schématique partielle d'un mode de réalisation d'une nacelle de l'invention ;
- les figures 2 à 4 sont des coupes latérales schématiques partielles du mode de réalisation d'un dispositif de modulation de la nacelle de la figure 1 dans lequel l'épaisseur de la couche limite est plus ou moins importante ;
- les figures 5a et 5b sont des coupes latérales schématiques partielles de la lèvre d'entrée d'air du mode de réalisation de la nacelle de la figure 1 comportant le dispositif de modulation suivant respectivement la figure 4 et la figure 3 ;
- la figure 5c est une coupe latérale schématique partielle de la lèvre d'entrée d'air d'une variante des figures 5a et 5b ;
- les figures 6a et 6b sont des coupes latérales schématiques partielles de la section aval du mode de réalisation de la nacelle de la figure 1 comportant le dispositif de modulation suivant respectivement la figure 4 et la figure 3 monté sur la structure externe;
- les figures 7a et 7b sont des coupes latérales schématiques partielles de la section aval du mode de réalisation de la nacelle de la figure 1 comportant le dispositif de modulation suivant respectivement la figure 4 et la figure 3 monté sur la structure interne fixe ;
- les figures 8a, 8c et 8e sont des coupes latérales schématiques partielles de la lèvre d'entrée d'air de différents modes de réalisation de la lèvre d'entrée d'air des figures 5a à 5c ;
- les figures 8b, 8d et 8f sont des coupes transversale partielles de la lèvre d'entrée d'air des modes de réalisation respectifs des figures 8a , 8c et 8^{e} ;
- la figure 9 est une coupe latérale schématique partielle d'une variante du mode de réalsiation de la figure 2 ;
- les figures 10a est une coupe latérale schématique partielle de la lèvre d'entrée d'air d'une variante de la figure 5c ;
- la figure 10b est une coupe latérale schématique partielle de la section aval d'une variante de la figure 6a.

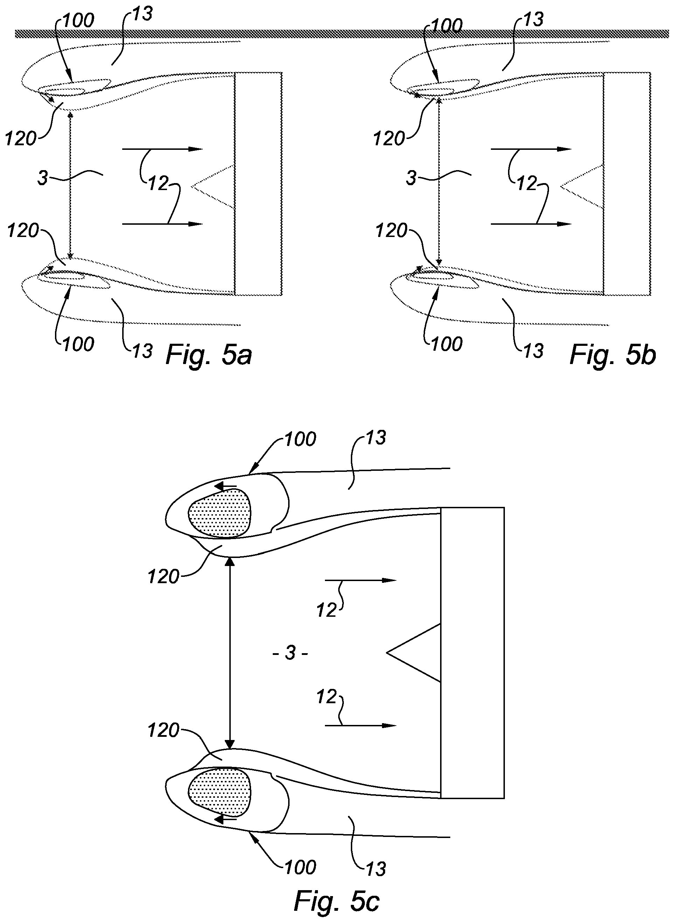

Il est précisé que les exemples des figures 5a à 5c, 8a à 8f et 10a ne font pas partie de l'invention.

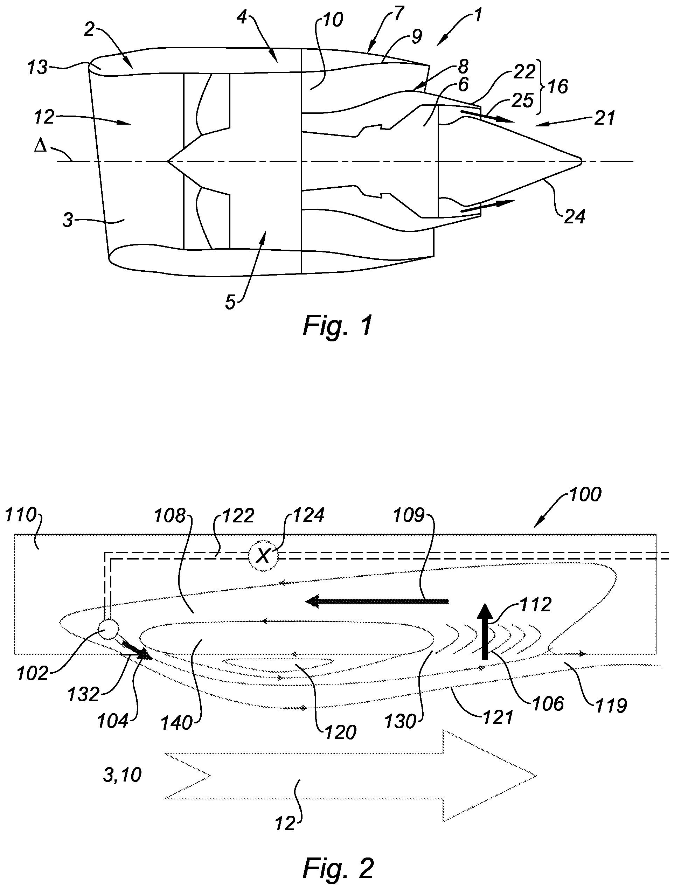

Comme représenté sur la figure 1, une nacelle 1 selon l'invention présente une forme sensiblement tubulaire selon un axe longitudinal Δ. La nacelle de l'invention 1 comprend une section amont 2 avec une lèvre d'entrée 13 d'air formant une entrée d'air 3, une section médiane 4 entourant une soufflante 5 d'un turboréacteur 6 et une section aval 7. La section aval 7 comprend une structure interne fixe 8 (IFS) entourant la partie amont du turboréacteur 6, une structure externe fixe (OFS) 9 et un capot mobile (non représenté) comportant des moyens d'inversion de poussée.

L'IFS 8 et l'OFS 9 délimite une veine annulaire 10 permettant le passage d'un flux d'air principal 12 pénétrant la nacelle 1 de l'invention au niveau de l'entrée d'air 3.

La nacelle de l'invention 1 comporte donc des parois délimitant un espace, telle que l'entrée d'air 3 ou la veine annulaire 10, dans lequel le flux d'air principal 12 pénètre, circule et est éjecté.

La nacelle 1 de l'invention se termine par une tuyère d'éjection 21 comprenant un module externe 22 et un module interne 24. Les modules interne 24 et externe 22 définissent un canal d'écoulement d'un flux d'air chaud 25 sortant du turboréacteur 6.

Comme représenté sur la figure 2, la nacelle de l'invention 1 comprend au moins un dispositif de modulation 100 de la section dudit espace 3,10 comportant :
- des moyens d'injection 102 d'un flux annexe d'un gaz 104 configurés pour faire varier l'orientation et/ou la vitesse dudit flux annexe 104;
- des moyens d'aspiration 106 d'au moins une partie de ce flux annexe injecté 104 ; et
- une zone de retour interne 108 du flux annexe 109 dans une ou plusieurs parois 110, ladite zone 108 étant configurée pour permettre la circulation de la partie du flux de gaz injecté 104 et du flux de gaz aspiré 112, et pour mettre en contact une partie du flux annexe injecté 104 et du flux d'air principal 12.

Le dispositif de modulation 100 engendre de manière ponctuelle et réversible une zone de circulation 120 de la couche limite formée par le contact entre le gaz du flux annexe 104 et l'air du flux principal 12. Une partie perdue 119 de flux d'air secondaire comprise entre la ligne maximale d'écoulement 121 du flux annexe dans l'espace et la couche limite est entraînée avec le flux d'air principal 12. Cette partie perdue 119 peut être plus ou moins faible en fonction de l'épaisseur de la couche limite. Plus la zone de circulation 120 présente une hauteur importante, plus le débit d'injection est important. En effet, la perte de débit est importante dans cette configuration.

La partie perdue 119 est entraînée par le flux principal 12 sans perturber le fonctionnement de la nacelle 1 de l'invention.

L'utilisation de moyens d'injection 102 et d'aspiration 106 associés à une zone de retour interne 108 permet de réduire le débit injecté dans le flux principal 12 car une partie du flux est reprise par aspiration et circule dans la zone de retour interne 108. De ce fait, la perturbation dans le fonctionnement de la nacelle 1 due à l'injection d'un flux annexe par le dispositif de modulation 100 de l'invention est diminuée par rapport à la perturbation engendrée par une injection continue d'un flux de gaz sans aspiration de ce dernier.

Le dispositif de l'invention permet en outre de circonscrire la partie du flux annexe turbulent ce qui n'affecte pas la performance de la nacelle 1 de l'invention.

L'épaisseur de la zone de circulation 120 de la couche limite engendre une réduction de la section d'entrée ou de sortie ressentie par le flux principal 12. L'épaisseur de ladite zone de circulation 120 est plus ou moins grande en fonction des moyens d'injection 102 et des moyens d'aspiration 106.

Par conséquent, le dispositif de modulation 100 permet de manière simple, efficace, fiable et très rapide de modifier la taille de la section de l'espace 3, 10. Le temps de réponse du dispositif 100 n'est pas limité par l'inertie de pièces mécaniques devant se mouvoir entre elles.

De plus, la présence de moyens d'injection et d'aspiration d'un flux de gaz permet d'éviter un flux trop puissant avec un débit trop important. Un tel flux serait difficilement contrôlable. Ainsi, il apparaît un débit permanent du flux annexe 104 et 112 au niveau de la couche limite en contact avec le flux d'air principal 12. Un tel débit engendre des forces de poussée améliorant le fonctionnement du turboréacteur, notamment en cas de surchauffe de ce dernier.

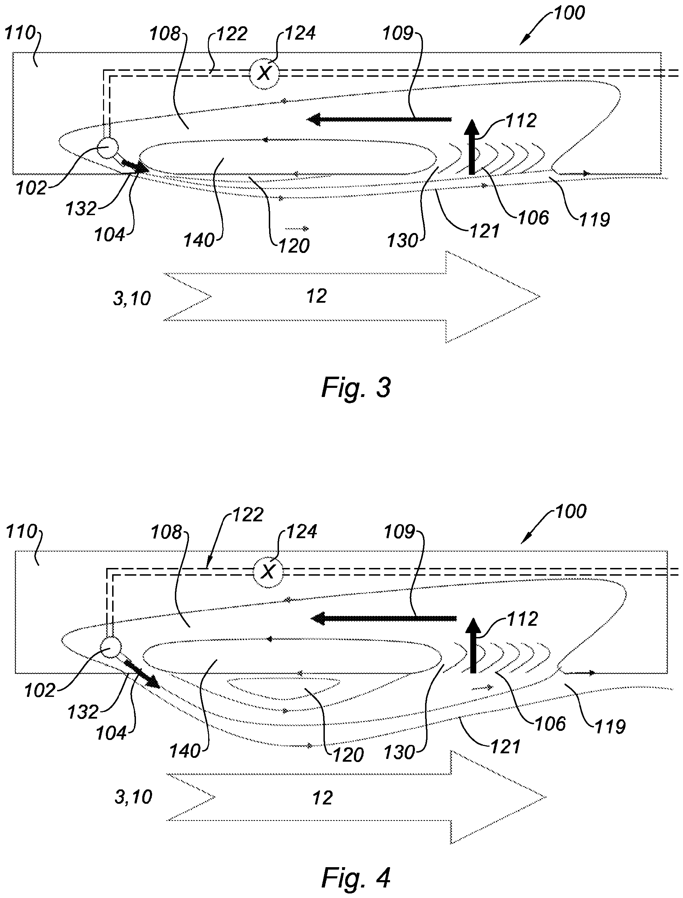

Les figures 2 à 4 montrent la variation de l'épaisseur de la zone de circulation 120 de la couche limite en fonction de l'orientation du flux annexe et/ou de la vitesse de ce dernier. Ainsi, l'épaisseur est d'autant plus grande que la vitesse du gaz injecté 104 est élevée ou que l'orientation du flux du gaz présente un certain angle. Ainsi, à titre d'exemple, si ledit angle est compris entre 0° et 90°, 0° corespondant sensiblement à une éjection alignée et opposée au flux principal 12, le flux annexe injecté 104 s'oppose au flux principal 12. Ceci induit un décollement frontal de la couche limite et à une zone de circulation 120 de taille importante qui dépend de la vitesse du gaz injecté. Selon un autre exemple, si ledit angle est compris entre 90° et 180°, 180° correspondant à une éjection du flux annexe sensiblement tangentielle à la paroi dans le sens de l'écoulement du flux principal 12, le flux annexe 104 s'additionne avec le flux principal. Ceci a pour effet de diminuer la taille de la zone de circulation 120. La couche limite se comporte alors comme un tapis roulant vis-à-vis de la paroi 110 en contact avec la couche limite..

Le gaz du flux annexe 104, 112, 109 est préférentiellement de l'air ce qui permet d'éviter d'alourdir la nacelle 1 de l'invention par le transport d'un gaz particulier. Ainsi, l'air injecté 104 peut être récupéré en aval de la nacelle 1 de l'invention, par exemple dans une zone contenant le turboréacteur 6 ou à proximité de ce dernier. Pour ce faire, l'air injecté en tant que flux annexe peut être capté sur le flux primaire chaud du turboréacteur de sorte à minimiser le débit capté et avoir une énergie importante. Cet air peut être avantageusement utilisé pour dégivrer la paroi 110 de la section.

Les moyens d'injection 102 sont configurés pour faire varier la vitesse et/ou l'orientation du flux secondaire 104 par effet d'éjecteur induit par le flux annexe 104. Les moyens d'injection 102 peuvent comprendre une buse d'éjection ce qui permet d'injecter simplement et en peu de place le gaz du flux annexe 104.

La buse d'éjection peut être orientable ce qui permet de modifier l'épaisseur de la couche limite 120. Pour ce faire, il est possible d'adapter l'angle de confluence entre l'écoulement du gaz injecté et l'écoulement principal. Pour ce faire, la buse d'éjection peut être reliée à des capteurs reliés au turboréacteur 6 permettant de modifier l'orientation de la dite buse au besoin.

Les moyens d'injection 102 peuvent également comprendre un système de prélèvement 122 du gaz formant le flux annexe 104 comprenant au moins une vanne 124 configurée pour faire varier le débit du flux d'air secondaire 104. Le système de prélèvement 122 comprend typiquement des tuyaux comme illustrés sur les figures 2 à 4 pour acheminer ledit gaz aux moyens d'injection 102. Comme indiqué plus haut, dans le cas où le gaz est de l'air, les tuyaux peuvent débouchés sur une zone à proximité du turboréacteur 6.

La ou les vannes 124 peuvent être contrôlées par des capteurs, notamment des capteurs reliés au turboréacteur 6, en particulier au FADEC. De ce fait, l'injection du gaz dans l'espace 3,10 est réalisée de manière à optimiser le fonctionnement du turboréacteur 6 en fonction des conditions de vol. L'utilisation de vannes 124 permet de régler le débit et l'énergie cinétique du flux annexe 104 injecté ce qui permet de moduler la distortion de la couche limite produite in fine dans le flux principal 12 et donc de changer la section de passage par la seule action sur la ou les vannes 124.

Par ailleurs, la zone de retour interne délimite avec la zone de circulation un profil de la couche limite en îlot ou encore en forne sensiblement de bosse. Ce profil est avantageusement maintenu grâce à des plaques disposées de manière sensiblement radiale et alignés avec le flux injecté de manière appropriée. Ces plaques sensiblement longitudinales peuvent être situées dans la zone d'injection mais également dans la zone d'aspiration où elles renforcent les grilles ou les paroi perméables.

L'aspiration par lesdits moyens d'aspiration 106 utilise principalement la dépression engendrée par les moyens d'injection 102 situés en amont des moyens d'aspiration 106 qui tend à aspirer le gaz à l'intéreur de la cavité de l'aval vers l'amont. Cette effet est notamment connu sous le nom de pompe à éjection ou éjecteur.

Les moyens d'aspiration 106 peuvent être choisis parmi une paroi perforée monolithique, une paroi à cellules alvéolaires, des grilles, notamment des grilles d'aube, des treillis, une ou plusieurs fentes longitudinales ou non ce qui permet une aspiration efficace et peu encombrante.

En particulier, les moyens d'aspiration peuvent être sous la forme d'orifices d'aspiration, notamment de grille(s) d'aube orientée(s). L'usage de telle(s) grilles d'aube orientée(s) permet de rendre l'aspiration encore plus efficace et moins encombrante

Selon un mode de réalisation, les moyens d'injection 102 et/ou d'aspiration 106 peuvent être régulés par un dispositif de modification de l'energie cinétique, du débit et de l'orientation du flux annexe 104 et 112 ce qui permet de contrôler l'épaisseur de la zone de circulation 120 de la couche limite. A titre d'exemple, on peut citer des grilles d'aspiration sensiblement orientables, des buses sensiblement orientables et d'un orifice de taille variable par l'utilisation d'un diaphragme, par exemple.

La zone de retour interne 108 peut être une cavité, notamment une cavité annulaire, comprenant une ouverture en aval 130 configurée pour aspirer au moins une partie du gaz 112 du flux annexe en contact avec l'air du flux principal 12 et une sortie en amont 132 configurée pour permettre la circulation du gaz injecté 104 par les moyens d'injection 102 et le gaz 109 circulant dans la cavité. Une telle cavité simplifie l'installation du dispositif de modulation 100 et n'alourdit pas non plus la masse de la nacelle 1 de l'invention.

Selon un mode de réalisation, la paroi 140 sensiblement en regard du flux de gaz injecté 104 par les moyens d'injection 102 présente une surface arrondie ou anguleuse ce qui permet d'avoir le profil du flux annexe souhaité.

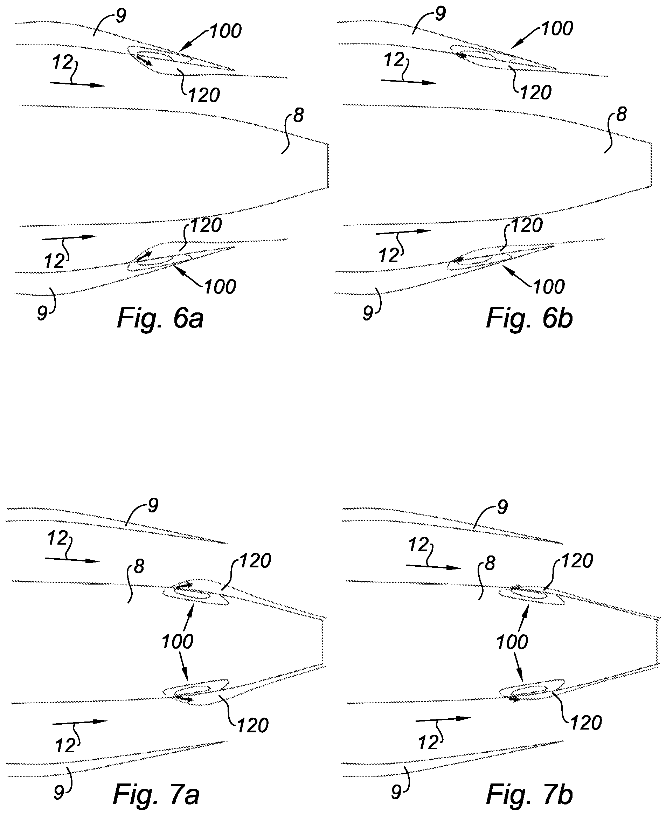

Le dispositif de modulation 100 peut être disposé dans la paroi de la lèvre d'entrée d'air 13 (voir figures 5a,5b et 5c), dans la paroi de la structure externe 9 (voir les figures 6a et 6b) et/ou dans la paroi de la structure interne 8 (voir les figures 7a et 7b).

Dans le cas d'un dispositif de modulation 100 disposé dans la paroi de la lèvre d'entrée d'air 13, la zone de retour interne peut avantageusement englober ladite lèvre d'entrée d'air 13, notamment au niveau du bord d'attaque de la nacelle, et en assure ainsi le dégivrage lorsque le gaz injecté est à une température appropriée, notamment lorsque ledit gaz est prélevé au niveau du flux primaire du turboréacteur. La mutualisation des fonctions de contrôle de section d'entrée d'air et de dégivrage permet ainsi un gain de masse significatif.

De manière plus précise, la partie avant externe de la zone de retour interne peut être constituée par la lèvre d'entrée d'air. Il est possible de modifier la forme de la zone de circulation de la couche limite pour créer une striction au début de la paroi à dégivrer et y localiser des moyens d'injection (voir figure 5c).

Le gaz chaud servant au dégivrage peut ainsi être injecté sensiblement au début de la zone à dégivrer. Au niveau de la paroi de la lèvre d'entrée d'air, l'écoulement en contact avec la paroi est plus chaud et peut être accéléré à l'endroit pour le dégivrage. Dans ce mode de réalisation, la cloison avant de l'entré d'air peut correspondre à la partie amont de la zone de retour interne.

Le flux de gaz aspiré par les moyens d'aspiration est moins chaud en aval de l'injection. De ce fait, la cloison aval est moins chaude que celle de la nacelle utilisant un dispositif de dégivrage de l'art antérieur. Le dégivrage est ainsi optimisé.

La zone de circulation de la couche limite où l'épaisseur est maximale peut être utilisée comme conduit d'amenée et de répartition du flux annexe injecté. Afin de découpler le système de dégivrage du contrôle de la section de sortie, un ou plusieurs moyens d'injection peuvent être adjoints à ceux du dégivrage et une sortie additionelle peut être rajoutée sur la partie externe de la nacelle 1, notamment au niveau de la jonction entre la lèvre d'entrée d'air 13 et le panneau externe de la section médiane 4. Ceci permet de décharger une partie du flux servant au dégivrage si besoin. Le dégivrage est typiquement effectué lors des phases de décollage et de descente où la section de la lèvre d'entrée d'air 13 devrait être la plus petite.

De ce fait, l'espace est alors la veine annulaire 10 formée par les parois de la structure interne fixe 8 et la structure externe 9 ou l'entrée d'air 3 formée par la lèvre d'entrée d'air 13.

Le dispositif de modulation 100 engendre des forces de poussée qui peuvent contribuer à optimiser le fonctionnement du turboréacteur 6, notamment lorsque ledit dispositif 100 est installer en section aval 7 dans les parois de la structure interne fixe 8 et de la structure externe 9.

Dans le cas où le dispositif de modulation 100 est installé dans les parois de la lèvre d'entrée d'air 13 et en fonction de l'épaisseur d'une zone appelée zone « d'eau morte », il est possible d'augmenter la vitesse du flux principal 12 de sorte à obtenir un col sonique capable d'annihiler toute nuisance sonore due aux pales de la soufflante du turboréacteur.

Comme cela est visible sur la figure 5a, le dispositif de modulation 100 est dans une configuration qui accélère la vitesse du flux d'air principal 12 et donc bloque les nuisances sonores transitant par ce col sonique.

Le dispositif de modulation 100 du mode de réalisation de la figure 5b permet d'optimiser la poussée en fonction de la vitesse de l'aéronef.

Dans ces deux modes de réalisation, l'adaptation de la taille de la section du flux d'air principal 12 permet d'optimiser le fonctionnement du turboréacteur 6 et de la pression subie par l'entrée d'air 3.

En particulier, lors des phases de décollage et de descente de l'aéronef, le dispositif de modulation 100 permet d'augmenter la section de l'espace 3 afin de suivre le régime du turboréacteur 6 et d'optimiser ce dernier.

Le dispositif de modulation 100 peut également servir à transférer de l'énergie à la couche limite en cas de vent de travers par rapport à la nacelle 1 de l'invention, en positionnant la couche limite suffisamment en amont sur la lèvre d'entre d'air 13 et en utilisant en angle d'injection approprié. Cette configuration permet de résister à un vent de travers avec un profil aérodynamique plus fin et une structure plus légère que dans l'art antérieur.

Ledit dispositif 100 peut également servir de système de dégivrage intégré particulièrement efficace en étendant la zone de retour interne 108 à l'ensemble de la lèvre d'entrée d'air 13 à dégivrer.

Le dispositif de modulation 100 des modes de réalisation des figures 6a et 7a permet une forte injection en diminuant la section d'éjection du flux d'air principal 12. Cette configuration correspond en général au mode dit de croisière.

Le dispositif de modulation 100 des modes de réalisation des figures 6b et 7b permet en revanche une faible injection correspondant à une phase de fonctionnement intense du turboréacteur 6 couplé à une atténuation acoustique, notamment lors de la phase de décollage.

Dans ces quatres modes de réalisation, le débit du flux annexe de gaz est optimisé en fonction du régime du turboréacteur et en fonction de la configuration choisie. Ainsi, une diminution de la section d'éjection de l'espace 10 engendre une atténuation acoustique et permet un très fort taux de détente à bas régime du turboréacteur 6 en optimisant le cycle de ce dernier à grand taux de dilution. Ainsi, le dispositif de modulation 100 permet de manière avantageuse de remplacer les tuyères variables utilisées en section aval de la nacelle 1 de l'invention.

Selon un mode de réalisation non représenté, la nacelle peut comporter un dispositif de modulation de l'invention ou bien une pluralité de dispositifs de modulation. Dans le cas d'une pluralité de dispositifs, ces derniers peuvent être disposés à un même endroit ou à différents endroits de la nacelle, par exemple au niveau de la lèvre d'entrée d'air et de la structure externe. Dans ce cas, le flux annexe injecté peut être injecté de manière différente tant au niveau de l'angle d'éjection que du débit employé.

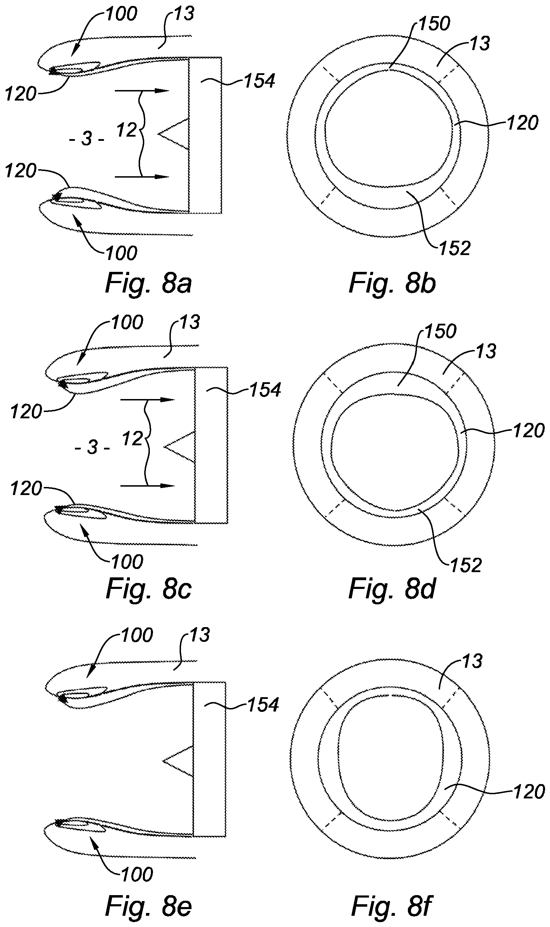

Dans le cas d'une entrée d'air 3, la partie basse 152, ou encore appelée 6h lorsqu'on regarde de face l'entrée d'air 3, peut présenter une zone de circulation 120 épaisse par rapport à la partie haute 150, ou encore appelée 12h lorsqu'on regarde de face l'entrée d'air 3, afin d'éviter une distorsion de l'écoulement sur la partie basse 152 de la soufflante 154 lors du décollage de l'aéronef (voir figures 8a et 8b).

Dans le cas d'une entrée d'air 3, la partie haute 150 peut présenter une zone de circulation épaisse par rapport à la partie basse 152 afin d'éviter une divergence de l'écoulement (voir figure 8c et 8d), lors du régime de croisière de l'aéronef.

Dans le cas d'une entrée d'air 3, la ou les deux parties latérales de la nacelle lorsqu'on regarde de face l'entrée d'air 3 peuvent présenter une zone de circulation 10 plus épaisse que la zone de circulation 120 de la partie haute 150 et de la partie basse 152 afin d'éviter une distorsion de l'écoulement sur la soufflante 154 (voir figure 8e et 8f), lors du décollage en vent de travers.

Ainsi, il est possible de modifier la section de la lèvre d'entrée d'air sans complexifier la construction de la lèvre d'entrée d'air 3. En outre, il est possible d'avoir un gain de masse en réduisant l'épaisseur de bord d'attaque et la longueur de la lèvre d'entrée d'air 13.

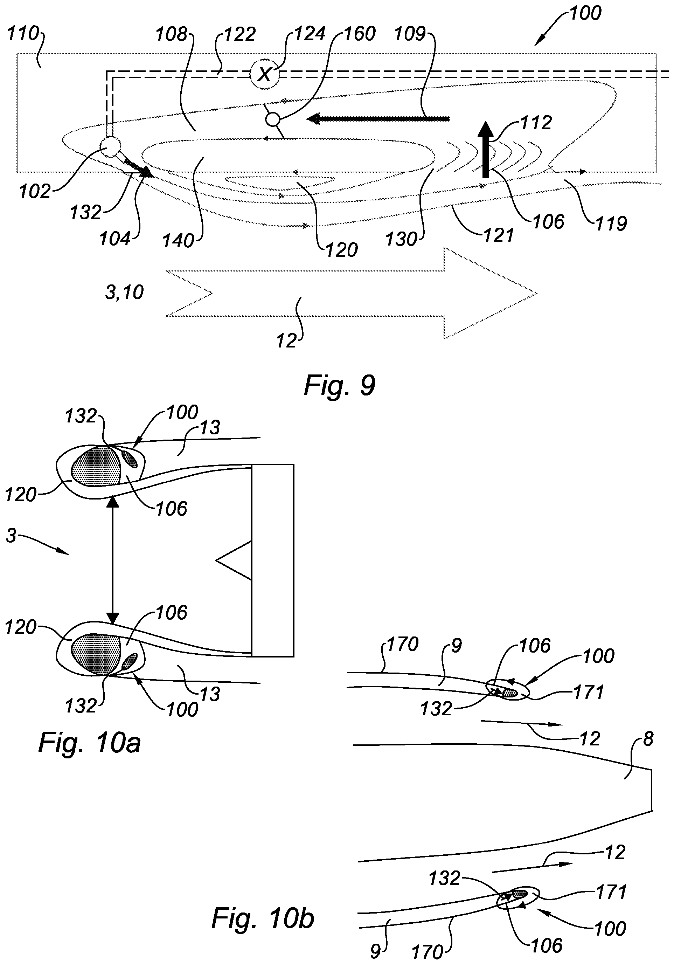

Comme représenté sur la figure 9, ans le cas d'un pilotage d'une entrée d'air 3 ou d'une tuyère d'éjection 21, un dispositif de modification de la section de la zone de retour interne 108 peut être installé pour optimiser la structure de l'écoulement du flux annexe 109 et la taille de la zone de recirculation 120. A titre d'exemple, ledit dispositif peut comporter une vanne 160 disposée dans la zone de retour interne 108 et/ou une paroi mobile assujettie à une des parois 110, 140 délimitant la zone de retour interne 108.

Dans le cas d'un pilotage de la circulation aérodynamique autour de la nacelle, la présente invention peut être utilisée conjointement dans l'entrée d'air et dans la sortie d'éjection. Dans ce cas, il peut être intéressant, sur l'entrée d'air, de localiser la zone d'injection 132 ou la zone d'aspiration 106 l'une à l'exterieur de l'entrée d'air 3 et l'autre à l'intérieur, selon le but recherché (voir figure 10a). De même, pour la tuyère d'éjection, la zone d'aspiration 106 peut être localisée sur la paroi externe 170 de la nacelle, engendrant un contournement 171 du bord de fuite de la nacelle (voir figure 10b).

## Revendications

1. Nacelle (1) pour un turboréacteur (6) d'aéronef double flux présentant un axe longitudinal (Δ) et une section arrière comportant une veine annulaire formant un espace (3) de circulation d'un flux d'air principal (12) délimitée par au moins une paroi d'une structure interne fixe (8), la structure interne fixe (8) étant destinée à entourer la structure du turboréacteur à l'aval d'une soufflante, et au moins une paroi d'une structure externe (9), ladite nacelle (1) comprenant au moins un dispositif de modulation (100) de la section transversale dudit espace (3) disposé dans la paroi de la structure externe et/ou de la structure interne fixe et comportant :
- des moyens d'injection (102) d'un flux annexe (104) d'un gaz configurés pour faire varier l'orientation et/ou la vitesse dudit flux annexe (104);
- des moyens d'aspiration (106) d'au moins une partie de ce flux annexe injecté (112) ; et
- une zone de retour interne (108) du flux annexe (109) dans une ou plusieurs parois (110), ladite zone (108) étant configurée pour permettre la circulation de la partie du flux annexe injecté (104) et du flux annexe aspiré (112), et pour mettre en contact une partie du flux annexe de gaz injecté (104) et du flux d'air principal (12).

2. Nacelle (1) selon la revendication précédente, dans laquelle le gaz du flux annexe (104, 112, 109) est de l'air.

3. Nacelle (1) selon l'une quelconque des revendications précédentes, dans laquelle les moyens d'injection (102) comprennent une buse d'éjection.

4. Nacelle (1) selon la revendication précédente, dans laquelle la buse d'éjection est orientable.

5. Nacelle (1) selon l'une quelconque des revendications précédentes, dans laquelle les moyens d'injection (102) comprennent un système de prélèvement de gaz (122) comprenant au moins une vanne (124) configurée pour faire varier le débit du flux annexe (104, 109, 112).

6. Nacelle (1) selon la revendication précédente, dans laquelle la ou les vannes (124) sont contrôlées par des capteurs.

7. Nacelle (1) selon l'une quelconque des revendications précédentes, dans laquelle les moyens d'aspiration (106) sont choisis parmi une paroi perforée monolithique, une paroi à cellules alvéolaires, des grilles, notamment des grilles d'aube, des treillis, une ou plusieurs fentes longitudinales ou non.

8. Nacelle (1) selon l'une quelconque des revendications précédentes, dans laquelle les moyens d'injection (102) et/ou d'aspiration (106) sont régulés par un dispositif de modification de l'energie cinétique, du débit et de l'orientation du flux annexe (104).

9. Nacelle (1) selon l'une quelconque des revendications précédentes, dans laquelle la zone de retour interne (108) est une cavité comprenant une ouverture en aval (130) configurée pour aspirer au moins une partie du gaz en contact avec l'air du flux principal (12) et une sortie en amont (132) configurée pour permettre la circulation du gaz injecté (104) par les moyens d'injection (102) et le gaz (109) circulant dans la cavité.

10. Nacelle (1) selon l'une quelconque des revendications précédentes, dans laquelle la paroi (140) sensiblement en regard du flux annexe de gaz injecté (104) par les moyens d'injection (102) présente une surface arrondie ou anguleuse.

## Patentansprüche

1. Gondel (1) für ein Turbostrahltriebwerk (6) eines Flugzeugs mit doppeltem Strom, die eine Längsachse (Δ) und eine hintere Sektion aufweist, umfassend eine runde Leitung, die einen Raum (3) zur Zirkulation eines Hauptluftstroms (12) bildet, begrenzt durch mindestens eine Wand mit einer festen internen Struktur (8), wobei die feste interne Struktur (8) ausgelegt ist, um die Struktur des Turbostrahltriebwerks nachgelagert von einem Gebläse zu umgeben, und mindestens eine Wand einer äußeren Struktur (9), wobei die Gondel (1) mindestens eine Vorrichtung zur Modulation (100) des Querschnitts des Raums (3) umfasst, die in der Wand der äußeren Struktur und/oder der festen inneren Struktur angeordnet ist, und umfassend:
- Mittel zur Injektion (102) eines Nebenflusses (104) eines Gases, die konfiguriert sind, um die Ausrichtung und/oder die Geschwindigkeit des Nebenflusses (104) variieren zu lassen;
- Mittel zum Ansaugen (106) von mindestens einem Teil dieses injizierten Nebenflusses (112); und
- eine innere Rückkehrzone (108) des Nebenflusses (109) in einer oder in mehreren Wänden (110), wobei die Zone (108) konfiguriert ist, um die Zirkulierung des Teils des injizierten Nebenflusses (104) und des angesaugten Nebenflusses (112) zu ermöglichen, und um einen Teil des Nebenflusses von injiziertem Gas (104) und des Hauptluftflusses (12) in Kontakt zu bringen.

2. Gondel (1) nach dem vorhergehenden Anspruch, wobei das Gas des Nebenflusses (104, 112, 109) Luft ist.

3. Gondel (1) nach einem der vorhergehenden Ansprüche, wobei die Mittel zur Injektion (102) eine Auswurfdüse umfassen.

4. Gondel (1) nach dem vorhergehenden Anspruch, wobei die Auswurfdüse ausgerichtet werden kann.

5. Gondel (1) nach einem der vorhergehenden Ansprüche, wobei die Mittel zur Injektion (102) ein System zur Entnahme von Gas (122) umfassen, umfassend mindestens einen Schieber (124), der konfiguriert ist, um den Durchsatz des Nebenflusses (104, 109, 112) variieren zu lassen.

6. Gondel (1) nach dem vorhergehenden Anspruch, wobei der oder die Schieber (124) von Sensoren gesteuert sind,

7. Gondel (1) nach einem der vorhergehenden Ansprüche, wobei die Mittel zum Ansaugen (106) ausgewählt sind aus einer monolithischen perforierten Wand, einer Wand mit Alveolarzellen, Gitter, insbesondere Schaufelgitter, Vergitterungen, eine oder mehrere längs oder nicht längs gerichtete Schlitze.

8. Gondel (1) nach einem der vorhergehenden Ansprüche, wobei die Mittel zur Injektion (102) und/oder zum Ansaugen (106) durch eine Vorrichtung zur Modifikation der kinetischen Energie, des Durchsatzes und der Ausrichtung des Nebenflusses (104) geregelt werden.

9. Gondel (1) nach einem der vorhergehenden Ansprüche, wobei die innere Rückkehrzone (108) ein Hohlraum ist, umfassend eine nachgelagerte Öffnung (130), die konfiguriert ist, um mindestens einen Teil des Gases, das mit der Luft des Hauptflusses (12) in Kontakt steht, anzusaugen, und einen vorgelagerten Ausgang (132), der konfiguriert ist, um die Zirkulation des Gases (104), injiziert durch die Mittel zur Injektion (102), und des Gases (109), das im Hohlraum zirkuliert, zu ermöglichen.

10. Gondel (1) nach einem der vorhergehenden Ansprüche, wobei die Wand (140), die sich im Wesentlichen gegenüber dem Nebenfluss des Gases (104), injiziert durch die Mittel zur Injektion (102), befindet, eine abgerundete oder gewinkelte Oberfläche aufweist.

## Claims

1. A nacelle (1) for a bypass aircraft turbojet engine (6) having a longitudinal axis (Δ) and a rear section including an annular flow path forming a circulation space (3) of a main air flow (12) delimited by at least one wall of an inner fixed structure (8), the inner fixed structure (8) being intended to surround the structure of the turbojet engine downstream of a fan, and at least one wall of an outer structure (9), said nacelle (1) comprising at least one modulation device (100) of the cross section of said space (3) disposed in the wall of the outer and/or of the inner fixed structure and including:
- means (102) for injecting an auxiliary flow (104) of a gas configured to vary the orientation and/or the velocity of said auxiliary flow (104);
- means (106) for sucking at least one portion of this injected auxiliary flow (112); and
- an inner return area (108) of the auxiliary flow (109) in one or more wall(s) (110), said area (108) being configured to allow the circulation of the portion of the injected auxiliary flow (104) and of the sucked auxiliary flow (112), and to contact a portion of the injected gas auxiliary flow (104) and of the main air flow (12).

2. The nacelle (1) according to the preceding claim, wherein the gas of the auxiliary flow (104, 112, 109) is air.

3. The nacelle (1) according to any one of the preceding claims, wherein the injection means (102) comprise an ejection nozzle.

4. The nacelle (1) according to the preceding claim, wherein the ejection nozzle is orientable.

5. The nacelle (1) according to any one of the preceding claims, wherein the injection means (102) comprise a gas sampling system (122) comprising at least one valve (124) configured to vary the flow rate of the auxiliary flow (104, 109, 112).

6. The nacelle (1) according to the preceding claim, wherein the valve(s) (124) is/are controlled by sensors.

7. The nacelle (1) according to any one of the preceding claims, wherein the suction means (106) are selected from a monolithic perforated wall, a honeycomb cell wall, cascades, in particular blade cascades, lattices, one or more longitudinal slot(s) or not.

8. The nacelle (1) according to any one of the preceding claims, wherein the injection (102) and/or suction (106) means are regulated by a device for modifying the kinetic energy, the flow rate and the orientation of the auxiliary flow (104).

9. The nacelle (1) according to any one of the preceding claims, wherein the inner return area (108) is a cavity comprising a downstream opening (130) configured to suck at least one portion of the gas in contact with the air of the main flow (12) and an upstream outlet (132) configured to allow the circulation of the injected gas (104) by the injection means (102) and the gas (109) circulating in the cavity.

10. The nacelle (1) according to any one of the preceding claims, wherein the wall (140) substantially facing the injected gas auxiliary flow (104) by the injection means (102) has a rounded or angular surface.
